# EUROPEAN PATENT APPLICATION

(11) **EP 0 890 901 A1**
(43) Date of publication of application: **13.01.1999**
(21) Application number: 98305395.0
(22) Date of filing: 07.07.1998
(51) Int. Cl.: G06F 9/46

(54) **Method, system and program storage for operating a group of computers**

(30) Priority: 11.07.1997 JP 186117/97
(71) Applicant: TEIJIN SEIKI COMPANY LIMITED, Osaka (JP)
(72) Inventor: Chiba, Takahiro, c/o Teijin Seiki Co., Ltd., Tarui-cho, Fuwa-gun, Gifu (JP)
(74) Representative: Murnane, Graham John

(57) **Abstract**

Herein disclosed is a method of operating a group of computers including a plurality of computers (200, 201 and 202) being held in communication with each other and each having resources (205, 206 and 207). The method comprises the steps of (a) recognizing the resources (205, 206 and 207) of each of the computers (200, 201 and 202) and (b) managing the resources (205, 206 and 207) recognized in the step (a). In order to execute a predetermined program being loaded into one of the computers (200, 201 and 202), the method further comprises the following steps in the step (b). The step (b) comprises the steps of (b1) segmenting the predetermined program into a plurality of programs corresponding to the computers (200, 201 and 202) in accordance with the recognized resources (205, 206 and 207) of the computers (200, 201 and 202), (b2) delivering each of the programs segmented in the step (b1) to each of the computers (200, 201 and 202), respectively, (b3) operating each of the computers (200, 201 and 202) to execute each of the segmented programs respectively to form each result, (b4) transmitting each of the results from each of the computers (200, 201 and 202), respectively and (b5) integrating each of the results transmitted in the step (b4) to perform the predetermined function of the predetermined program. The method thus constructed as described above can execute the predetermined program even when the amount of data of the program is too large to be executed by one of the computers (200, 201 and 202).

## Description

### FIELD OF THE INVENTION

The present invention relates to a method of and a system for operating a group of computers including a plurality of computers each having resources being held in communication with each other, and to a storage device storing therein a program for operating the group of computers to control the resources of the computers.

### BACKGROUND OF THE INVENTION

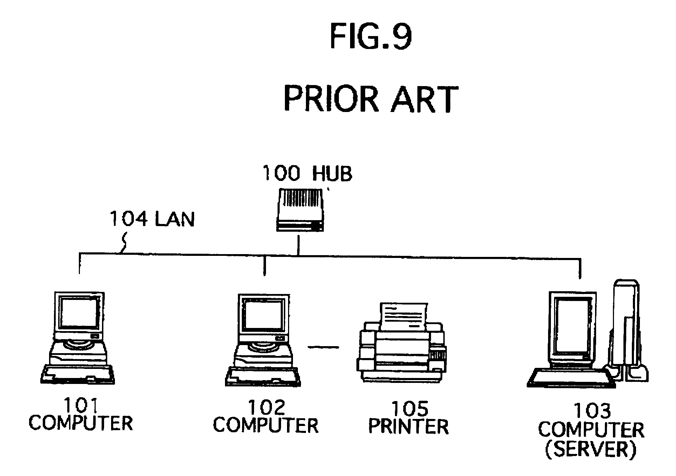

There is shown in FIG. 9 a group of computers forming a computer network using a local area network (LAN) 104. The group of computers includes a hub 100 having a plurality of terminals, computers 101, 102 and 103 each having a interface unit to be connected to each of the terminals of the hub 100 for forming the computer network, and a printer 105 being connected to the computer 102. Each of the computers 101, 102 and 103 comprises resources such as a central processing unit (CPU), a main memory and storage devices, e.g., an internal hard disk and an external storage device. Each of the computers may be operated by a publicly known operating system program such as "NETWARE" (Registered Trademark) or "WINDOWS NT" (Registered Trademark) being installed in their storage device. In this group of computers, the computer 103 serves as a server machine which supplies a variety of services such as a file service, a database service and a communication service. The computers 101 and 102, on the other hand, serve as client machines which receive the services from the server machine.

By forming the computer network as described above, the printer 105 can be operated by the computer 101 and 103 in addition to the computer 102. Furthermore, program files being installed in the storage device of the computer 103 can be utilized by the computers 101 and 102, and variety of information installed in the storage devices of the computers 101, 102 and 103 are commonly utilized by either of three computers 101, 102 and 103.

In this computer network, however, only data of the program files and the information are transmitted through the computer network and commonly utilized by the computers 101, 102 and 103. It means that the resources of each of the computers 101, 102 and 103 such as the CPU, the main memory and the storage devices cannot be commonly utilized by the computers 101, 102 and 103.

Recently, resources of computers such as performance of CPU, capacity of memories and storage devices have been developed one after another. Taking the CPU for example, the performance of the CPU has been developed drastically from "80286", "80386" and "80486" to "Pentium". With the performance improvement of the CPU, programs having a lot of instructions and a large amount of data capacity have been developed. In order to execute such programs, a main memory and a hard disk of a computer are required to have large capacity as well as a CPU of the computer is required to be of high performance. This results in the fact that an old computer, having old resources such as a CPU of poor performance and a main memory and a hard disk each having small capacity, cannot perform those programs each having a large amount of data.

Even when the old computer is connected to the computer network, the old computer cannot perform the programs each having a large amount of data because of the lack of the performance of the CPU and the capacity of the main memory and the hard disk.

### SUMMARY OF THE INVENTION

It is therefore an object of the present invention to provide a method of operating a group of computers, including a plurality of computers each having resources and being held in communication with each other, to have the group of computers form a virtual computer having large capacity of resources and utilize the resources of the virtual computer for executing a program having a large amount of data.

It is another object of the present invention to provide a system for operating a group of computers, including a plurality of computers each having resources and being held in communication with each other, to have the group of computers form a virtual computer having large capacity of resources and utilize the resources of the virtual computer for executing a program having a large amount of data.

It is a further object of the present invention to provide a program storage device storing a program for operating a group of computers, including a plurality of computers each having resources and being held in communication with each other, to have the group of computers form a virtual computer having large capacity of resources and utilize the resources of the virtual computer for executing a program having a large amount of data.

In accordance with a first aspect of the present invention, there is provided a method of operating a group of computers. The group of computers includes first and second computets being held in communication with each other and each having resources. The method of operating the group of computers comprises the steps of: (a) recognizing the resources of each of the first and second computers; and (b) managing the resources recognized in the step (a).

The method of operating the group of computers may further comprise the steps in the step (b) as follows to execute a predetermined program being included in the first computer to perform a predetermined function. The step (b) may have the steps of: (b1) segmenting the predetermined program into first and second programs in accordance with the recognized resources of the first and second computers; and (b2) delivering the first and second programs segmented in the step (b1) to the first and second computers, respectively.

The step (b) may further have the step of (b3) operating the first and second computers to execute the first and second programs respectively to form first and second results. The step (b) may still further have the steps of: (b4) transmitting the first and second results of the first and second programs from the first and second computers, respectively; and (b5) integrating the first and second results transmitted in the step (b4) to perform the predetermined function of the predetermined program.

Each of the first and second computers has a CPU. The CPU of each of the first and second computers may be recognized in the step (a), the CPU recognized in the step (a) may be managed in the step (b) and operated to execute the first and second programs of the predetermined program in the step (b3).

Each of the first and second computers has a storage device and the storage device of each of the first and second computers may be recognized in the step (a).

The step (b) may have the step of (b6) assigning a part of the resources of the second computer to be utilized by the first computer. The step (b) may still further have the step of operating the first computer to utilize the part of the resources of the second computer assigned in the step (b6).

The step (b) may have the step of (b8) having the first computer operate the resources of the second computer.

In accordance with a second aspect of the present invention, there is provided a system for operating a group of computers. The group of computers includes first and second computers being held in communication with each other and each having resources. The system for operating the group of computers comprises: recognizing means for recognizing the resources of each of the first and second computers; and managing means for managing the resources recognized by the recognizing means.

The system for operating the group of computers may further comprise the means as the managing means as follows to execute a predetermined program being included in the first computer to perform a predetermined function. The managing means may have the segmenting means for segmenting the predetermined program into first and second programs in accordance with the recognized resources of the first and second computers; and delivering means for delivering the first and second programs segmented by the segment means to the first and second computers, respectively.

The management means may further have operating means for operating the first and second computers to execute the first and second programs respectively to form first and second results. The managing means may still further have: transmitting means for transmitting the first and second results of the first and second programs from the first and second computers, respectively; and integrating means for integrating the first and second results transmitted by the transmitting means to perform the predetermined function of the predetermined program.

Each of the first and second computers has a CPU. The CPU of each of the first and second computers may be recognized by the recognizing means, the CPU recognized by the recognizing means may be managed by the managing means and operated to execute the first and second programs of the predetermined program by the operating means.

Each of the first and second computers has a storage device and the storage device of each of the first and second computers may be recognized by the recognizing means.

The managing means may have assigning means for assigning a part of the resources of the second computer to be utilized by the first computer. The managing means may further have operating means for operating the first computer to utilize the part of the resources of the second computer assigned by the assigning means.

The managing means may have means for having the first computer operate the resources of the second computer.

The group of computers may form a computer network to have the first and second computers held in communication with each other.

In accordance with a third aspect of the present invention, there is provided a program storage device storing therein a program executed by a computer to perform a method of operating a group of computers. The group of computers includes first and second computers being held in communication with each other and each having resources. The method of the program comprises the steps of: (a) recognizing the resources of each of the first and second computers; and (b) managing the resources recognized in the step (a).

The method of operating the group of computers may further comprise the steps in the step (b) as follows to execute a predetermined program being included in the first computer to perform a predetermined function. The step (b) may have the steps of: (b1) segmenting the predetermined program into first and second programs in accordance with the recognized resources of the first and second computers; and (b2) delivering the first and second programs segmented in the step (b1) to the first and second computers, respectively.

The step (b) may further have the step of (b3) operating the first and second computers to execute the first and second programs respectively to form first and second results. The step (b) may still further have the steps of: (b4) transmitting the first and second results of the first and second programs from the first and second computers, respectively; and (b5) integrating the first and second results transmitted in the step (b4) to perform the predetermined function of the predetermined program.

Each of the first and second computers has a CPU. The CPU of each of the first and second computers may be recognized in the step (a), the CPU recognized in the step (a) may be managed in the step (b) and operated to execute the first and second programs of the predetermined program in the step (b3).

Each of the first and second computers has a storage device and the storage device of each of the first and second computers may be recognized in the step (a).

The step (b) may have the step of (b6) assigning a part of the resources of the second computer to be utilized by the first computer. The step (b) may still further have the step of operating the first computer to utilize the part of the resources of the second computer assigned in the step (b6).

The step (b) may have the step of (b8) having the first computer operate the resources of the second computer.

### BRIEF DESCRIPTION OF THE DRAWINGS

The present invention and many of the advantages thereof will be better understood from the following detailed description when considered in connection with the accompanying drawings, in which:
FIG. 1 is a block diagram showing a preferred embodiment of a group of computers including three computers and being operated by the operating system according to the present invention;
FIG. 2 is a first flowchart showing a part of flow of the steps of the program operating the group of computers shown in FIG. 1;
FIG. 3 is a second flowchart showing a part of flow of the steps of the program operating the group of computers shown in FIG. 1;
FIG. 4 is a third flowchart showing a part of flow of the steps of the program operating the group of computers shown in FIG. 1;
FIG. 5(A) is an example view of information of the resources of the virtual computer;
FIG. 5(B) is an example view of information of the resources of the virtual computer same as the example view shown in FIG. 3(A) but written in a text file form;
FIG. 6 is an example view showing a virtual memory map of the virtual computer;
FIG. 7 is an example view showing a virtual hand disk capacity of the virtual computer;
FIG. 8 is an example view showing a virtual area map of the virtual computer; and
FIG. 9 is a block diagram showing a conventional computer network formed with a group of computers.

### DESCRIPTION OF THE PREFERRED EMBODIMENTS

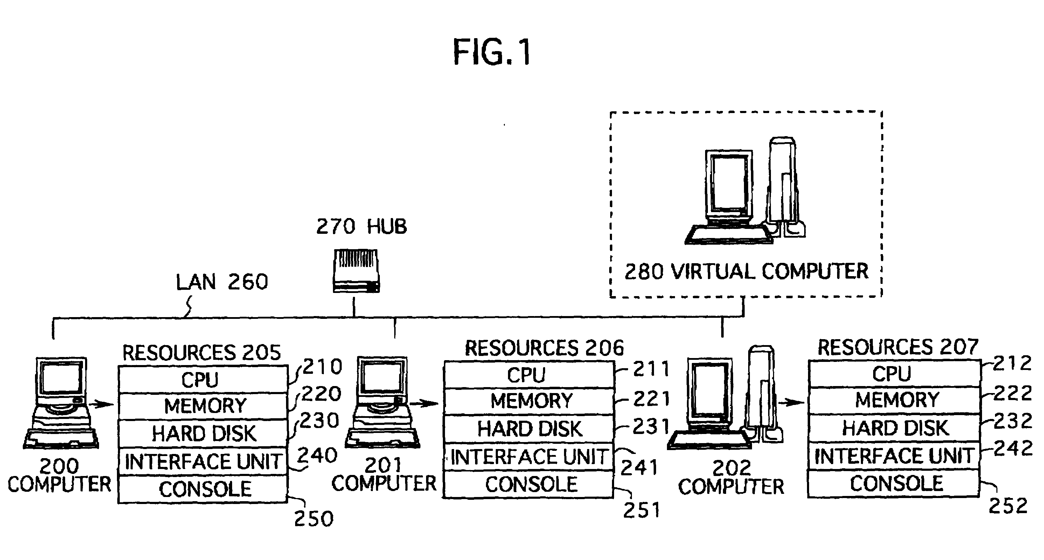

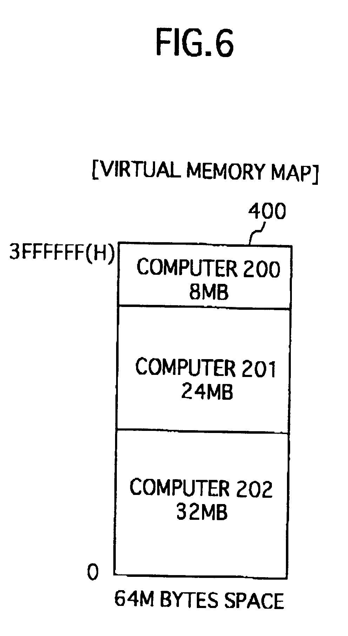

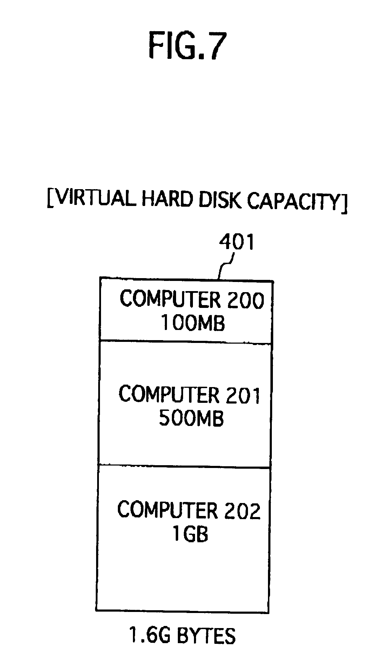

Referring to FIGS. 1 to 8 of the drawings, a preferred embodiment of the operating system for operating a group of computers according to the present invention will be described hereinafter.

Referring to FIG. 1, the group of computers forming a computer network, in this case a local area network (LAN) 260, and being operated by the operating system according to the present invention is shown.

The group of computers includes a hub 270 having a plurality of terminals (not shown in the drawings) and computers 200, 201 and 202. Each of the computers 200, 201 and 202 respectively comprises resources 205, 206 and 207 such as a central processing unit (CPU) 210, 211 and 212, a main memory 220, 221 and 222, a storage device, in this case an internal hard disk 230, 231 and 232, an input-output unit (I/O) (not shown in the drawings) and an interface unit 240, 241 and 242. Each of the computers 200, 201 and 202 further has a console 250, 251 and 252 such as a cathode-ray tube (CRT) display, a keyboard and a mouse. Each of the computers 200, 201 and 202, or at least one of the computers 200, 201 and 202, may have a predetermined program having a large amount of data (hereinafter simply referred to as a "predetermined large program") loaded into its hard disk 230, 231 and 232 to be executed to perform a predetermined function.

The I/O of each of the computers 200, 201 and 202 is connected to each of the terminals of the hub 270 through the interface unit 240, 241 and 242 of each of the computers 200, 201 and 202 respectively. The computers 200, 201 and 202 are, therefore, linked with each other through the hub 270 to form the computer network.

The operating system operates the group of computers as above described to form a virtual computer 280 which can execute the predetermined large program being loaded into one of the computers 200, 201 and 202 even when the amount of the data of the predetermined large program is so large that each of the computers 200, 201 and 202 by itself cannot execute the predetermined large program. This results from the fact that the resources 205, 206 and 207 of each of the computers 200, 201 and 202 becomes accessible to all of the computers 200, 201 and 202 forming the computer network when the group of computers is operated by the operating system. Therefore, it is assumed as if the group of computers has the virtual computer 280 by forming the computer network and being operated by the operating system.

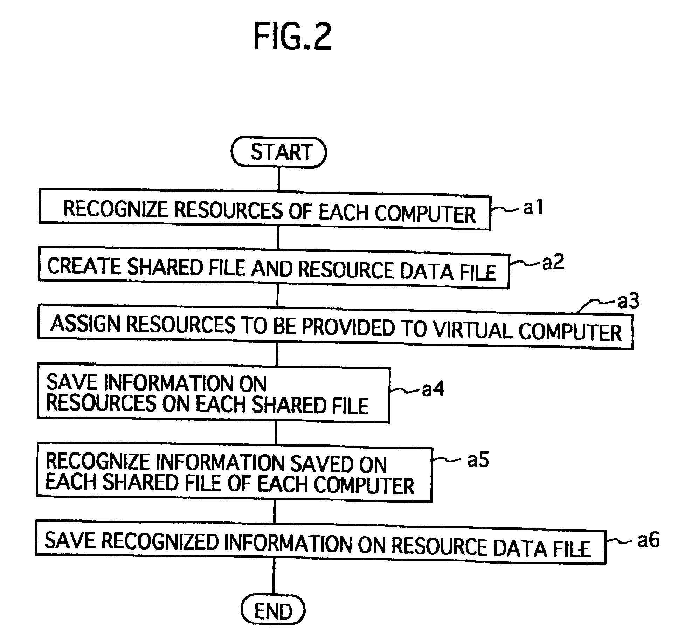

The operating system is formed with a program for operating the group of computers (hereinafter simply referred to as an "operating system program"). The operating system program is recorded on and provided with a program storage device, such as a flexible disk, a CD-ROM, a ROM OD and the like, in this case the hard disk 230, 231 and 232 of each of the computers 200, 201 and 202, in a computer executable form. The operating system program comprises the steps as shown in FIGS. 2, 3 and 4.

Referring to FIG. 2, the resources 205, 206 and 207 of each of the computers 200, 201 and 202 are recognized in the step a1. In the step a2, a shared file and a resource data file are created. The shared file is a file on which information on the resources 205, 206 and 207 of each of the computers 200, 201 and 202 to be provided to the virtual computer 280 is saved The resource data file is a file on which information on the resources 205, 206 and 207 of the computers 200, 201 and 202 forming the computer network to be provided to the virtual computer 280 is saved. In the step a3, part of the capacity of each of the resources 205, 206 and 207 such as the main memory 220, 221 and 222 and the hard disk 230, 231 and 232, which are to be provided to the virtual computer 280, are assigned. In the step a4, information on the assigned capacity of the main memory 220, 221 and 222 and the hard disk 230, 231 and 232, and other infonnation such as the type of the CPU 210, 211 and 212 and the type of the interface unit 240, 242 and 242 are saved on the shared file. In the step a5, the information saved on the shared file are recognized. In the step a6, the recognized information are saved on the resource data file.

The resources 205, 206 and 207 of the computers 200, 201 or 202 are provided to the virtual computer 280 on the basis of the assigned capacity of each of the resources. This results in the fact that the information saved in the resource data file indicates the amount of the resources of the virtual computer 280 which are commonly accessible to the computers 200, 201 and 202.

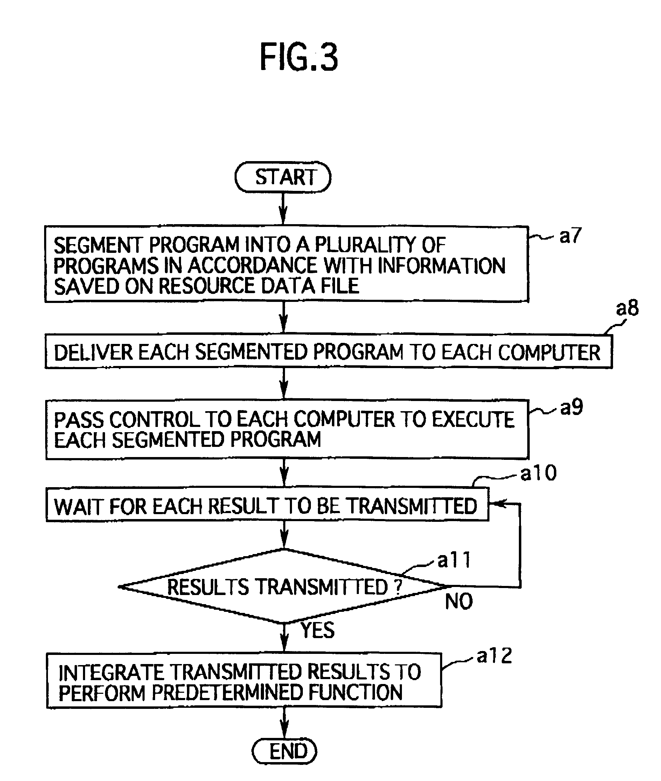

The operating system program further comprises the steps of accessing the virtual computer 280 to execute one of the predetermined large programs being loaded into one of the computers 200, 201 and 202 to perform the predetermined function. When one of the computers 200, 201 and 202 requests to have virtual computer 280 execute the predetermined large program to perform the predetermined function, the operating system program performs the following steps as shown in FIG. 3.

In the step a7, one of the predetermined large programs is segmented into a plurality of programs, in this case three programs corresponding to the computers 200, 201 and 202, each being executable form in accordance with the recognized and saved information on the resource data file. In the step a8, the segmented programs are delivered to each of the computers 200, 201 and 202. In the step a9, the control to execute the segmented program is passed to each of the computers 200, 201 and 202 to execute each of the segmented programs to form a result. In the step a10, wait for each of the results to be transmitted. When each of the results is transmitted, the operating system program proceeds to the step a12 via the step a11. In the step a12, the transmitted results of each of the segmented programs are integrated to perform the predetermined function.

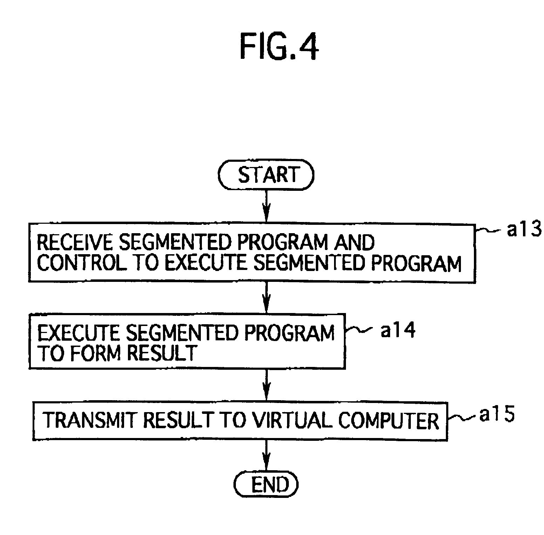

The operating system program further comprises the steps of operating each of the computers 200, 201 and 202 to actually execute the segmented program. When one of the computers 200, 201 and 202 requests to execute the predetermined large program to perform the predetermined function and the operating system program perform the preceding steps a7 and a9, then, the operating system program performs the following steps as shown in FIG. 4.

In the step a13, the segmented program and the control to execute the segmented program are received. In the step a14, the segmented program is executed to form a result. In the step a15, the result of the execution of the segmented program is transmitted to the virtual computer 280.

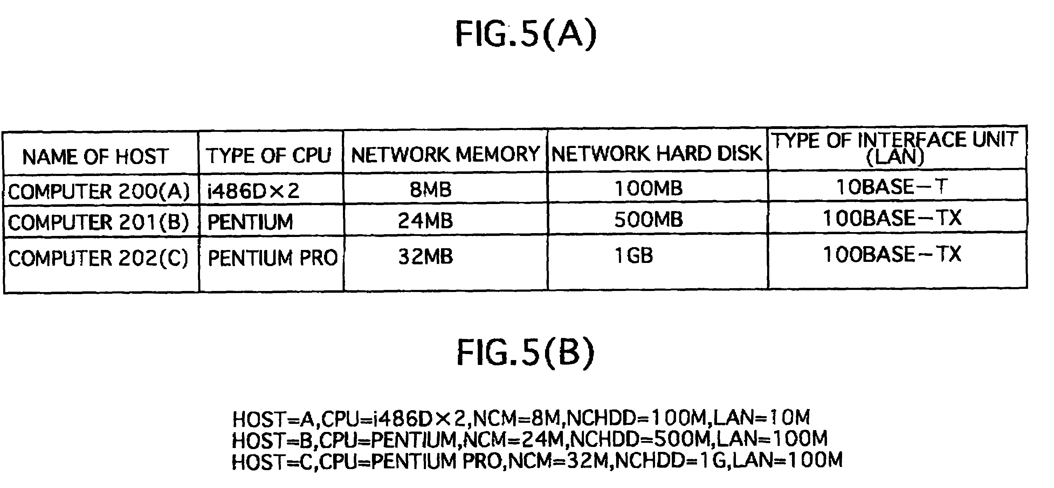

Referring to FIG. 5(A), an example of the information on the resources of the virtual computer 280 which are provided by the computers 200, 201 and 202 is shown. It is understood from FIG. 5(A) that the computer 200 provides capacity of 8M bytes of the main memory 220 and capacity of 100M bytes of the hard disk 230, and has the "i486DX2" type CPU 210 and the "10BASE-T" type interface unit 240. The computer 201 provides capacity of 24 Mbytes of the main memory 221 and capacity of 500M bytes of the hard disk 231, and has the "Pentium" type CPU 211 and the "100BASE-TX" type interface unit 241. The computer 202 provides capacity of 32M bytes of the main memory 222 and capacity of 1G bytes of the hard disk 232, and has the "Pentium pro" type CPU 212 and the "100BASE-TX" type interface unit 242. The information on the resources of the virtual computer 280 is saved in the resource data file in a text file form as shown in FIG. 5(B). The virtual computer 280 is supposed to have capacity of 64M bytes for a main memory 400 and capacity of 1.6G bytes for a hard disk 401 in total as shown in FIGS, 6 and 7, in which a virtual memory map and a virtual hard disk capacity are respectively shown.

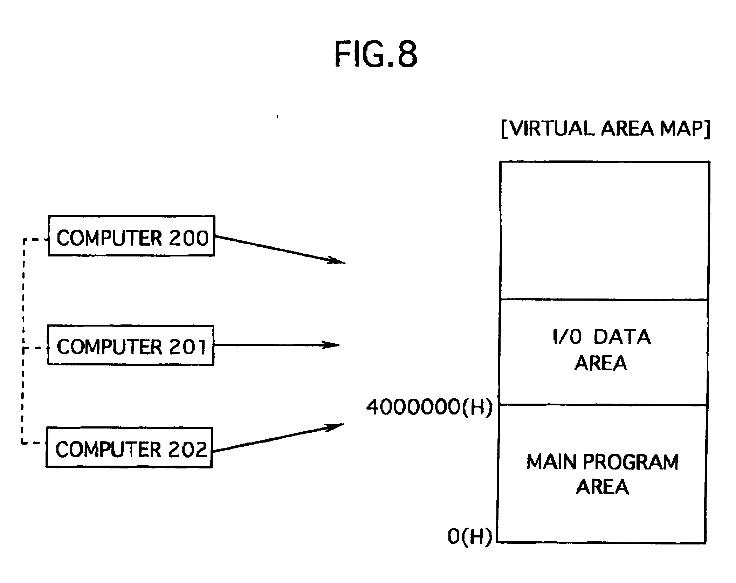

The virtual computer 280 forms a virtual area map as shown in FIG. 8. The virtual area map of the virtual computer comprises an I/O data area and a main program area. When each of the computers 200, 201 and 202 execute the segmented program to form a result, each of the results is transmitted to the virtual computer 280 and the information on each of the results is written on the virtual area map of the virtual computer 280. The virtual area map is actually formed in one of the computers 200, 201 and 202, for example in the computer 202, and accessible to all of the computers 200, 201 and 202.

When the virtual computer 280 is practically utilized by an operator to execute one of the predetermined programs being loaded into one of the computers 200, 201 and 202, the console 250, 251 and 252 such as the CRT display, the keyboard and the mouse of one of the computers 200, 201 and 202 is used by the operator to enter necessary instructions and obtain the predetermined function of the predetermined large program. It is assumed in the following description, that the console 252 of the computer 202 is used by the operator to execute the program being loaded into the computer 202.

When the computers 200, 201 and 202 are connected with each other to form the computer network as shown in FIG. 1 and each of the computers 200, 201 and 202 has the operating system program installed in its hard disk 230, 231 and 232, each of the computers 200, 201 and 202 performs the steps a1 to a6 of the operating system program as shown in FIG. 2.

This performance may be proceeded as a background processing. It means that each of the computers 200, 201 and 202 can execute another program (hereinafter referred to as a "normal program") to perform a predetermined function while performing the above described steps a1 to a6 of the operating system program. In this case, the console 250, 251 and 252 of'each of the computers 200, 201 and 202 may be used by an operator to enter necessary instructions and obtain the predetermined function of the normal program.

When the steps a1 to a6 are completed, the console 250, 251 and 252 of one of the computers 200, 201 and 202, in this case the console 252 of the computer 202, is used by the operator to enter the necessary instruction of the operating system program. The operator can select one of the programs being loaded into one of the computer 200, 201 and 202, in this case the computer 202, with the keyboard and the mouse of the computer 202.

At this time, it is assumed that the group of computers forming the computer network comprises the virtual computer 280 being aperated by the operating system, having the virtual main memory 400 and the virtual bard disk 401 and being capable of utilizing the CPU 210, 211 and 212 of either of the computers 200, 201 and 202.

The virtual computer 280 performs the steps a7 to a12 as shown in FIG. 3 while each of the computers 200, 201 and 202 performs the steps a13 to a15 to execute each of the segmented programs of the predetermined large program.

While performing the steps a10 to a12, the results of each of the segmented programs are written on the virtual area map of the virtual computer 280 by each of the computers 200, 201 and 202, as shown in FIG. 8, to be integrated to perform the predetermined function. The virtual area map of the virtual computer 280 is accessible to all of the computers 200, 201 and 202. When the predetermined function of the predetermined large program is required to be outputted, the operator can access to the I/O data area of the virtual area map of the virtual computer, which is actually formed in one of the computers 200, 201 and 202, in this case the computer 202, with the console 250, 251 and 252 of one of the computers 200, 201 and 202, in this case the console 252 of the computer 202, to have the predetermined function displayed on the CRT display of the computer 202.

This performance of the steps a7 to a15 may be proceeded as a background processing as well. It means that each of the computers can execute the normal program to perform the predetermined function while performing the above described steps a7 to a15 of the operating system program to execute the predetermined large program. In this case, the console 250, 251 and 252 of each of the computers 200, 201 and 202 may be used by an operator to enter necessary instructions and obtain the predetermined function of the normal program.

In this embodiment, the console 252 of the computer 202 is used by the operator to enter the necessary instruction and obtain the function of the predetermined large program executed by the virtual computer 280, however, the console 250, 251 and 252 of any of the computers 200, 201 and 202 can be used to access to the virtual computer 280.

The many features and advantages of the invention are apparent from the detailed specification, and thus it is intended by the appended claims to cover all such features and advantages of the invention which fall within the true spirit and scope thereof. Further, since numerous modifications and changes will readily occur to those skilled in the art, it is not desired herein, and accordingly, all suitable modifications and equivalents may be constructed as being encompassed within the scope of the invention.

## Claims

1. A method of operating a group of computers including first and second computers (200, 201 and 202) being held in communication with each other and each having resources (205, 206 and 207), comprising the steps of:
(a) recognizing said resources (205, 206 and 207) of each of said first and second computers (200, 201 and 202); and
(b) managing the resources (205, 206 and 207) recognized in the step (a).

2. The method as set forth in claim 1, in which said first computer (200, 201 or 202) includes a predetermined program to be executed to perform a predetermined function, said step (b) having the steps of:
(b1) segmenting said predetermined program into first and second programs in accordance with said recognized resources (205, 206 and 207) of said first and second computers (200, 201 and 202); and
(b2) delivering the first and second programs segmented in said step (b1) to said first and second computers (200, 201 and 202), respectively.

3. The method as set forth in claim 2, in which said step (b) further has the step of (b3) operating said first and second computers (200, 201 and 202) to execute said first and second programs to form first and second results respectively.

4. The method as set forth in claim 3, in which said step (b) further has the steps of: (b4) transmitting said first and second results of said first and second programs from said first and second computers (200, 201 and 202), respectively; and (b5) integrating said first and second results transmitted in said step (b4) to perform said predetermined function of said predetermined program.

5. The method as set forth in claim 3, in which each of said first and second computers (200, 201 and 202) has a CPU (210, 211 and 212), said CPU (210, 211 and 212) of each of said first and second computers (200, 201 and 202) being recognized in said step (a), and the CPU (210, 211 and 212) recognized in said step (a) being managed in said step (b) and operated to execute said first and second programs of said predetermined program in said step (b3).

6. The method as set forth in claim 1, in which each of said first and second computers (200, 201 and 202) has a storage device ((220,221 and 222) and (230, 231 and 232)) and said storage device ((220,221 and 222) and (230, 231 and 232)) of each of said first and second computers (200, 201 and 202) is recognized in said step (a).

7. The method as set forth in claim 1, in which said first computer (200, 201 or 202) includes a predetermined program, said step (b) having the step of (b6) assigning a part of said resources (205, 206 and 207) of said second computer (200, 201 and 202) to be utilized by said first computer (200, 201 or 202).

8. The method as set forth in claim 7, in which said step (b) further has the step of (b7) operating said first computer (200, 201 or 202) to utilize the part of said resources of said second computer (200, 201 and 202) assigned in the step (b6).

9. The method as set forth in claim 1, in which said first computer (200, 201 or 202) includes a predetermined program, said step (b) having the step of (b8) having said first computer (200, 201 or 202) operate said resources (205, 206 and 207) of said second computer (200, 201 and 202).

10. A system for operating a group of computers including first and second computers (200, 201 and 202) being held in communication with each other and each having resources (205, 206 and 207), comprising:
recognizing means for recognizing said resources (205, 206 and 207) of each of said first and second computers (200, 201 and 202); and
managing means for managing the resources (205, 206 and 207) recognized by said recognizing means.

11. The system as set forth in claim 10, in which said first computer (200, 201 and 202) includes a predetermined program to be executed to perform a predetermined function, said managing means having:
segmenting means for segmenting said predetermined program into first and second programs in accordance with said recognized resources of said first and second computers (200, 201 and 202); and
delivering means for delivering the first and second programs segmented by said segment means to said first and second computers (200, 201 and 202), respectively.

12. The system as set forth in claim 11, in which said management means further has
operation means for operating said first and second computers (200, 201 and 202) to execute said first and second programs to form first and second results respectively.

13. The method as set forth in claim 12, in which said managing means further has:
transmitting means for transmitting said first and second results of said first and second programs from said first and second computers (200, 201 and 202), respectively; and
integrating means for integrating said first and second results transmitted by said transmitting means to perform said predetermined function of said predetermined program.

14. *The* system as set forth in claim 12, in which said first and second computers (200, 201 and 202) has a CPU (210, 211 and 212), said CPU (210, 211 and 212) of each of said first and second computers (200, 201 and 202) being recognized by said recognizing means, and the CPU (210, 211 and 212) recognized by said recognizing means being managed by said managing means and operated to execute said first and second programs of said predetermined program by said operating means.

15. The system as set forth in claim 10, in which each of said first and second computers (200, 201 and 202) has a storage device ((220,221 and 222) and (230, 231 and 232)) and said storage device ((220,221 and 222) and (230, 231 and 232)) of each of said first and second computers (200, 201 and 202) is recognized by said recognizing means.

16. The system as set forth in claim 10, in which each of said first computer (200, 201 or 202) includes a predetermined program, said managing means having
assigning means for assigning a part of said resources (205, 206 and 207) of said second computer (200, 201 and 202) to be utilized by said first computer (200, 201 or 202).

17. The system as set forth in claim 16, in which said managing means further has
operating means for operating said first computer (200, 201 or 202) to utilize the part of said resources (205, 206 and 207) of said second computer (200, 201 and 202) assigned by said assigning means.

18. The system as set forth in claim 10, in which said first computer (200, 201 or 202) includes a predetermined program, said managing means having
means for having said first computer (200, 201 or 202) operate said resources (205, 206 and 207) of said second computer (200, 201 and 202).

19. The system as set forth in claim 10, in which said group of computers forms a network to have said first and second computers (200, 201 and 202) held in communication with each other.

20. A program storage device storing therein a program executed by a computer to perform a method of operating a group of computers including first and second computers (200, 201 and 202) being held in communication with each other and each having resources (205, 206 and 207), said method comprising the steps of:
(a) recognizing said resources (205, 206 and 207) of each of said first and second computers (200, 201 and 202); and
(b) managing the resources (205, 206 and 207) recognized in the step (a).

21. The program storage device as set forth in claim 20, in which said first computer (200, 201 or 202) includes a predetermined program to be executed to perform a predetermined function, said step (b) of said method having the steps of:
(b1) segmenting said predetermined program into first and second programs in accordance with said recognized resources (205, 206 and 207) of said first and second computers (200, 201 and 202); and
(b2) delivering the first and second programs segmented in said step (b1) to said first and second computers (200, 201 and 202), respectively.

22. The program storage device as set forth in claim 21, in which said step (b) of said method further has the step of
(b3) operating said first and second computers (200, 201 and 202) to execute said first and second programs to form first and second results respectively.

23. The program storage device as set forth in claim 22, in which said step (b) of said method further has the steps of:
(b4) transmitting said first and second results of said first and second programs from said first and second computers (200, 201 and 202), respectively; and
(b5) integrating said first and second results transmitted in said step (b4) to perform said predetermined function of said predetermined program.

24. The program storage device as set forth in claim 23, in which each of said first and second computers (200, 201 and 202) has a CPU (210, 211 and 212), said CPU (210, 211 and 212) of each of said first and second computers (200, 201 and 202) being recognized in said step (a), and the CPU (210, 211 and 212) recognized in said step (a) being managed in said step (b) and operated to execute said first and second programs of said predetermined program in said step (b3).

25. The program storage device as set forth in claim 20, in which each of said first and second computers (200, 201 and 202) has a storage device ((220,221 and 222) and (230, 231 and 232)) and said storage device ((220,221 and 222) and (230, 231 and 232)) of each of said first and second computers (200, 201 and 202) being recognized in said step (a).

26. The program storage device as set forth in claim 20, in which said first computer (200, 201 or 202) includes a predetermined program, said step (b) having the step of (b6) assigning a part of said resources (205, 206 and 207) of said second computer (200, 201 and 202) to be utilized by said first computer (200, 201 or 202).

27. The program storage device as set forth in claim 26, in which said step (b) of said method further has the step of
(b7) operating said first computer (200, 201 or 202) to utilize the part of said resources (205, 206 and 207) of said second computer (200, 201 and 202) assigned in the step (b6).

28. The program storage device as set forth in claim 20, in which said first computer (200, 201 or 202) includes a predetermined program, said step (b) of said method having the step of
(b8) having said first computer (200, 201 or 202) operate said resources of said second computer (200, 201 and 202).
